(19) Europäisches Patentamt / European Patent Office / Office européen des brevets

(11) EP 2 785 756 B1

(12) EUROPÄISCHE PATENTSCHRIFT

(45) Veröffentlichungstag und Bekanntmachung des Hinweises auf die Patenterteilung:
01.08.2018 Patentblatt 2018/31

(21) Anmeldenummer: 12794232.4

(22) Anmeldetag: 20.11.2012

(51) Int Cl.:
C08G 18/12 (2006.01)    C08G 18/22 (2006.01)
C08G 18/28 (2006.01)    C08G 18/48 (2006.01)
B32B 5/18 (2006.01)     B32B 7/12 (2006.01)
B32B 27/40 (2006.01)    B60R 13/02 (2006.01)
B32B 37/12 (2006.01)

(86) Internationale Anmeldenummer:
PCT/EP2012/073048

(87) Internationale Veröffentlichungsnummer:
WO 2013/079353 (06.06.2013 Gazette 2013/23)

(54) **VERBUNDTEILE ENTHALTEND PLASTISCH VERFORMBAREN POLYURETHANHARTSCHAUMSTOFF, KLEBSTOFF UND ABDECKMATERIAL**

COMPOSITE PARTS CONTAINING PLASTICALLY DEFORMABLE POLYURETHANE RIGID FOAM, ADHESIVE AND COVERING MATERIAL

PIÈCES COMPOSITES COMPRENANT UNE MOUSSE RIGIDE EN POLYURÉTHANE PLASTIQUEMENT DÉFORMABLE, COLLE ET MATÉRIAU DE RECOUVREMENT

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 28.11.2011 EP 11190991

(43) Veröffentlichungstag der Anmeldung:
08.10.2014 Patentblatt 2014/41

(73) Patentinhaber: BASF SE
67056 Ludwigshafen am Rhein (DE)

(72) Erfinder:
• OTERO MARTINEZ, Iran
49448 Lemfoerde (DE)

• PACHECO GONZALEZ, Alfonso
08191 Sabadell (Barcelona) (ES)
• ANTICH MOROS, Ferran
08004 Barcelona (ES)

(74) Vertreter: BASF IP Association
BASF SE
G-FLP-C006
67056 Ludwigshafen (DE)

(56) Entgegenhaltungen:
EP-A1- 0 124 797        WO-A1-2010/139708
WO-A1-2010/139710       FR-A1- 2 654 385

## Beschreibung

Die vorliegende Erfindung betrifft ein Verfahren zur Herstellung von Verbundteilen aus einem thermoformbaren Polyurethan-Hartschaumstoff und einem Abdeckmaterial, bei dem man einen thermoformbaren Polyurethanschaumstoff vorlegt und mit Abdeckmaterial verklebt, wobei als Klebstoff ein feuchtigkeitshärtender Polyurethanklebstoff eingesetzt wird, der durch in Kontakt bringen mit einer alkalischen, wässrigen Alkalimetall-Lösung gehärtet wird, wobei der alkalischen, wässrigen Alkalimetall-Lösung keine Verbindungen zugegeben werden, die lösliche Silikate enthalten. Weiter betrifft die vorliegende Erfindung ein Verbundteil, erhältlich nach einem solchen Verfahren und die Verwendung eines solchen Verbundteils in Fahrzeugen.

Plastisch verformbare Polyurethan-Hartschaumstoffe, im Folgenden auch als thermoformbare Polyurethan-Hartschaumstoffe bezeichnet, und deren Verwendung als Innenverkleidung in Kraftfahrzeugen ist bekannt und beispielsweise beschrieben im "Kunststoffhandbuch, Band 7, Polyurethane", Carl Hanser Verlag, 3. Auflage 1993, Kapitel 6.5.4.1. Dabei wird der plastisch verformbare Polyurethanhartschaumstoff bei der Herstellung der Innenverkleidung in einer Form plastisch verformt und entweder während des Verformungsschritts oder nach erfolgter Verformung mit Abdeckmaterialien kaschiert. Als Abdeckmaterialien werden beispielsweise Verstärkungsmaterialien wie Glasfasermatten und/oder Dekormaterialien, wie beispielsweise Vliesstoffe verwendet. Diese Abdeckmaterialien werden während oder nach dem plastischen Verformen mit Hilfe eines Klebstoffs, meist auf Basis von Polyurethan, auf den Polyurethan-Hartschaumstoff aufgeklebt. Dabei ist es insbesondere von Vorteil, wenn das Kaschieren mit Abdeckmaterialien in einem Schritt zusammen mit dem plastischen Verformen erfolgen kann. Solche plastisch verformbaren Polyurethanhartschaumstoffe und das Kaschieren dieser thermoformbaren Polyurethan-Hartschaumstoffe mit Abdeckmaterialien ist beispielsweise in EP 437787 und DE 4333795 beschrieben.

Die bevorzugt eingesetzten Klebstoffe auf Basis von Polyurethan sind Insbesondere feuchtigkeitshärtende Einkomponenten-Klebstoffe. In diesem Fall werden die Klebstoffe auf den noch nicht verpressten Hartschaumstoff aufgetragen, mit Wasser besprüht, mit den Abdeckmaterialien kaschiert und bei erhöhter Temperatur in einer Form verpresst.

Als feuchtigkeitshärtende Einkomponenten-Klebstoffe werden vorzugsweise isocyanatterminierte Polyurethanprepolymere eingesetzt, die mit Katalysatoren versehen sind. Solche feuchtigkeitshärtende Einkomponenten-Klebstoffe, die zinnbasierte Katalyastoren oder tertiäte Amine als Katalysatoren aufweisen, sind beispielsweise in EP 464483 beschrieben. Nachteilig an solchen Klebstoffen ist, dass diese nur begrenzt lagerstabil sind, und häufig nur eine geringe Verarbeitungszeit aufweisen. Weiter sind Zinnorganische Verbindungen aus toxikologischer sicht bedenklich.

WO 2010/139708 beschreibt ein Verfahren zum Verkleben eines plastisch verformbaren Polyurethanhartschaumstoffs mit einem Abdeckmaterial, bei dem der feuchtigkeitshärtende Polyurethanklebstoff durch Zugabe einer wässrigen Alkalimetallsilicat-Lösung gehärtet wird. Zwar kann bei dieser Lösung auf den Einsatz von Katalysatoren im Polyurethanklebstoff verzichtet werden, wodurch die Verarbeitungszeit des Klebstoffs deutlich verlängert werden kann, allerdings muss Wasserglas in hohen Konzentrationen eingesetzt werden. Alkalimetallsilikatlösungen reagieren bereits mit geringen Mengen an Kohlendioxyd in der Umgebungsluft, was zu nur schwer entfernbaren Silikatablagerungen an den eingesetzten Geräten führt. Weiter ist auch die Mechanik der erhaltenen Verbundkörper verbesserungswürdig.

Aufgabe der vorliegenden Erfindung war es daher ein Verfahren zum Verkleben eines plastisch verformbaren Polyurethanhartschaumstoffs mit einem Abdeckmaterial zu liefern, bei dem auf den Einsatz von Katalysatoren im Polyurethanklebstoff verzichtet werden kann, wobei das Problem der schwer entfernbaren Ablagerungen an den eingesetzten Geräten vermieden wird. Weiter war es Aufgabe der vorliegenden Erfindung ein Verbundteil auf thermoformbaren Polyurethanschaumstoff und Abdeckmaterial zu liefern, das hervorragende mechanische Eigenschaften aufweist.

Die erfindungsgemäße Aufgabe wurde gelöst durch ein Verfahren zur Herstellung von Verbundteilen aus einem thermoformbaren Polyurethan-Hartschaumstoff und einem Abdeckmaterial, bei dem man einen thermoformbaren Polyurethanschaumstoff vorlegt und mit Abdeckmaterial verklebt, wobei als Klebstoff ein feuchtigkeitshärtender Polyurethanklebstoff eingesetzt wird, der durch in Kontakt bringen mit einer alkalischen, wässrigen Alkalimetall-Lösung gehärtet wird, wobei der alkalischen, wässrigen Alkalimetall-Lösung keine Verbindungen zugegeben werden, die lösliche Silikate enthalten. Weiter löst ein nach einem solchen Verfahren erhältliches Verbundteilen aus einem thermoformbaren Polyurethan-Hartschaumstoff und einem Abdeckmaterial die erfindungsgemäße Aufgabe.

Als Abdeckmaterialien werden dabei vorzugsweise übliche, zur Abdeckung von thermoformbaren Polyurethan-Hartschaumstoffen eingesetzte Materialien verwendet. Diese umfassen Glasfasermatten, Weichschaumstofflagen, Stoffe, wie Gewebe, Gewirke und Vliesstoffe, sowie Kombinationen aus den üblichen Abdeckmaterialien.

Als thermoformbarer Polyurthan-Hartschaumstoff kann jeder übliche thermoformbare Polyurethan-Hartschaumstoff eingesetzt werden. Solche Polyurethan-Hartschaumstoffe sind beispielsweise beschrieben in EP 437787, DE 4333795 und DE102004062540. Diese sind vorzugsweise offenporig und emittieren vorzugsweise keine Substanzen, die zur Geruchsbildung führen. In einer bevorzugten Ausführungsform wird ein thermoformbarer Polyurethanhartschaumstoff im Sinn der Erfindung erhalten indem man a) organische Polyisocyanate mit b) Polyetherole, enthaltend b1) 2 bis 4-funktionelles Polyoxyalkylenpolyol mit einer Hydroxylzahl von 150 bis 650 und einem Anteil an primären Hydroxylgruppen von größer 70 % und b2) di bis trifunktionelles Polyoxyalkylenpolyol mit einer Hydroxylzahl von 25 bis 40 und einem Anteil an primären Hydroxylgruppen von größer 70 %, gegebenenfalls c) Kettenverlängerungs- und/oder Vernetzungsmittel, d) Treibmittel, e) Katalysatoren und gegebenenfalls f) Hilfsmittel und Zusatzstoffe zu einer Reaktionsmischung vermischt und diese Reaktionsmischung ausreagieren lässt.

Erfindungsgemäße thermoformbare Polyurethan-Hartschaumstoffe können, vorzugsweise bei Werkzeugtemperaturen von 80 bis 160 °C, besonders bevorzugt von 100 bis 150 °C, plastisch verformt werden. Dabei werden als Einsatzstoffe a) bis f) übliche, in der Polyurethanchemie bekannte Einsatzstoffe verwendet. Das Polyoxyalkylenpolyole b1) enthält vorzugsweise mindestens 30 Gew.-%, besonders bevorzugt mindestens 50 Gew.-% Ethylenoxid. Das Polyoxyalkylenpolyole b2) enthält vorzugsweise mindestens 50 Gew.-%, besonders bevorzugt mindestens 80 Gew.-% Propylenoxid.

Neben den genannten Polyoxyalkylenpolyolen b1) und b2) können auch weitere Polyhydroxyverbindungen, wie weitere Polyetherole, Polyesterole oder andere, gegenüber Isocyanat reaktive Verbindungen, wie Polythiole oder Polyamine eingesetzt werden. Vorzugsweise beträgt der Gewichtsanteil der Verbindungen b1) und b2) an dem Gesamtgewicht der Komponente b) mindestens 50 Gew.-%, besonders bevorzugt mindestens 70 Gew.-% und insbesondere mindestens 80 Gew.-%. Dabei beträgt das Verhältnis von Polyoxyalkylenpolyole b1) und b2) vorzugsweise 0,8 : 1 bis 1,5 : 1.

Als Kettenverlängerungs- und/oder Vernetzungsmittel c) zur Herstellung des thermoformbaren Polyurethan-Hartschaumstoffs wird vorzugsweise Dipropylenglycol und/oder Tripropylenglycol eingesetzt.

Unter einem feuchtigkeitshärtende Polyurethanklebstoff wird im Rahmen der Erfindung eine Mischung, enthaltend ein Isocyanatgruppen aufweisendes Prepolymer, oder das Isocyanatgruppen aufweisendes Prepolymer selbst verstanden, wobei die Mischung mindestens 50 Gew.-%, vorzugsweise zu mindestens 80 Gew.-% und insbesondere zu mindestens 95 Gew.-% aus einem Isocyanatgruppen aufweisenden Prepolymer aufweist. Weiter kann ein erfindungsgemäßer feuchtigkeitshärtender Polyurethanklebstoff weitere Additive, wie oberflächenaktive Substanzen, Inhibitoren, wie Diglycol-bis-chlorformiat oder ortho-Phosphorsäure, Weichmacher, anorganische Füllstoffe, wie Sand, Kaolin, Kreide, Bariumsulfat, Siliziumdioxid, Oxidationsstabilisatoren, Farbstoffe und Pigmente, Stabilisatoren, z.B. gegen Hydrolyse, Licht, Hitze oder Verfärbung, anorganische und/oder organische Füllstoffe, Emulgatoren, Flammschutzmittel, Alterungsschutzmittel, Haftvermittler und Verstärkungsmittel sowie in der Polyurethanchemie gebräuchliche Katalysatoren enthalten. Dabei liegt die Viskosität des erfindungsgemäßen feuchtigkeitshärtenden Polyurethanklebstoffs vorzugsweise in einem Bereich von 500 bis 5000 mPas, besonders bevorzugt von 1000 bis 3000 mPas, gemessen bei 25 °C nach DIN 53 018.

Als isocyanatgruppenhaltiges Prepolymer wird im Rahmen der Erfindung das Umsetzungsprodukt von Polyisocyanaten mit polymeren Verbindungen, die zumindest zwei gegenüber Isocyanaten reaktive Gruppen aufweisen, gegebenenfalls Verbindungen mit einer gegenüber Isocyanaten reaktiven Gruppe sowie gegebenenfalls Kettenverlängerungs- und/oder Vernetzungsmitteln verstanden, wobei das Polyisocyanat im Überschuss eingesetzt wird.

Als Polyisocyanate können für die Herstellung des isocyanatgruppenhaltiges Prepolymers alle aus dem Stand der Technik bekannten aliphatischen, cycloaliphatischen und aromatischen zwei- oder mehrwertigen Isocyanate sowie beliebige Mischungen daraus eingesetzt werden. Vorzugsweise werden aromatische zwei- oder mehrwertigen Isocyanate eingesetzt. Beispiele sind 4,4', 2,4' und 2,2'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Isophorondiisocyanat (IPDI), 1,5-Naphthalindiisocyanat (NDI), 2,4,6-Toluoltriisocyanat und 2,4- und 2,6-Toluoldiisocyanat (TDI), oder Mischungen daraus.

Besonders bevorzugt werden 2,4-Toluoldiisocyanat, 2,6-Toluoldiisocyanat, 2,4'-Diphenylmethandiisocyanat und 4,4'-Diphenylmethandiisocyanat und höherkernige Homologe des Diphenylmethandiisocyanats (Polymer-MDI) sowie Gemische dieser Isocyanate, Uretonimin insbesondere eine Mischung aus 2,4'-Diphenylmethandiisocyanat und 4,4'-Diphenylmethandiisocyanat als Polyisocyanat (a) eingesetzt.

Als polymere gegenüber Isocyanaten reaktive Verbindungen mit zumindest zwei gegenüber Isocyanaten reaktiven Gruppen können für die Herstellung des isocyanatgruppenhaltigen Prepolymers alle Verbindungen mit zumindest zwei gegenüber Isocyanatgruppen reaktiven Gruppen eingesetzt werden. Diese weisen ein Molekulargewicht von mindestens 400 g/mol auf. Vorzugsweise werden eingesetzt Polyesterole, Polyetherole oder Polyether-Polyesterole, die beispielsweise durch Alkoxylierung von Polyestern erhalten werden können.

Polyetherole werden nach bekannten Verfahren, beispielsweise durch anionische Polymerisation mit Alkalihydroxiden oder Alkalialkoholaten als Katalysatoren und unter Zusatz mindestens eines Startermoleküls, das 2 bis 5, vorzugsweise 2 bis 4 und besonders bevorzugt 2 bis 3, insbesondere 2 reaktive Wasserstoffatome gebunden enthält, oder durch kationische Polymerisation mit Lewis-Säuren, wie Antimonpentachlorid oder Bortrifluorid-Etherat, aus einem oder mehreren Alkylenoxiden mit 2 bis 4 Kohlenstoffatomen im Alkylenrest hergestellt. Weiter können als Katalysatoren auch Multimetallcyanidverbindungen, sogenannte DMC-Katalysatoren, eingesetzt werden. Geeignete Alkylenoxide sind beispielsweise Tetrahydrofuran, 1,3-Propylenoxid, 1,2-bzw. 2,3-Butylenoxid und vorzugsweise Ethylenoxid und 1,2-Propylenoxid. Die Alkylenoxide können einzeln, alternierend nacheinander oder als Mischungen verwendet werden.

Bevorzugt werden 1,2-Propylenoxid, Ethylenoxid oder Mischungen aus 1,2-Propylenoxid und Ethylenoxid verwendet.

Als Startermolekül kommen vorzugsweise Wasser oder 2- und 3-wertige Alkohole in Betracht, wie Ethylenglykol, 1,2- oder 1,3-Propandiol, Diethylenglykol, Dipropylenglykol, 1,4-Butandiol, Glycerin und Trimethylolpropan.

Die bevorzugten Polyetherpolyole, besonders bevorzugt Polyoxypropylen- oder Polyoxypropylen-polyoxyethylen-polyole, besitzen eine Funktionalität von 2 bis 5, besonders bevorzugt von 2 bis 3 und Molekulargewichte von 400 bis 9.000, vorzugsweise 1.000 bis 6.000, besonders bevorzugt 1.500 bis 5.000 und insbesondere von 2.000 bis 4.000 g/mol. Besonders bevorzugt wird als Polyetherpolyol Polypropylenglykol mit einem gewichtsmittleren Molekulargewicht von 1500 bis 2500 g/mol eingesetzt.

Neben den Polymeren Verbindungen mit zumindest zwei gegenüber Isocyanatgruppen reaktiven Gruppen können auch Verbindungen mit nur einer gegenüber Isocyanaten reaktiven Gruppe eingesetzt werden. Dabei handelt es sich vorzugsweise Polyethermonoole, die ausgehend von monofunktionellen Startermolekülen, beispielsweise Ethylenglycolmonomethylether, analog zu den oben beschriebenen Polyetherolen erhalten werden. Dabei beträgt das Molekulargewicht der Polyethermonoole vorzugsweise 100 bis 1000 g/mol. Wenn Polyethermonoole eingesetzt werden, beträgt das Gewichtsverhältnis von Polyethetmonool zu Polyetherpolyol vorzugsweise 1:30 bis 4:1.

Gegebenenfalls können zur Herstellung des isocyanatgruppenhaltigen Prepolymers auch Kettenverlängerungs- und/oder Vernetzungsmittel eingesetzt werden. Die Zugabe der Kettenverlängerungs- und/oder Vernetzungsmittel kann vor, zusammen mit oder nach der Zugabe der Polyole erfolgen. Als Kettenverlängerungsmittel und/oder Vernetzungsmittel werden Substanzen mit einem Molekulargewicht von vorzugsweise kleiner 400 g/mol, besonders bevorzugt von 60 bis 350 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder in Form von Mischungen eingesetzt werden. Werden Kettenverlängerer eingesetzt, sind 1,3- und 1,2-Propandiol, Dipropylenglycol, Tripropylenglycol 1,3 Butandiol besonders bevorzugt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht von Polyisocyanaten, gegenüber polymeren gegenüber Isocyanat reaktiven Verbindungen und Kettenverlängerungsmitteln und/oder Vernetzungsmitteln zum Einsatz.

Die Isocyanatprepolymere sind erhältlich, indem vorstehend beschriebene Polyisocyanate im Überschuss, beispielsweise bei Temperaturen von 30 bis 100 °C, bevorzugt bei etwa 80 °C, mit den polymeren Verbindungen mit mindestens zwei gegenüber Isocyanaten reaktiven Gruppen, gegebenenfalls Verbindungen mit einer gegenüber Isocyanaten reaktiven Gruppe sowie gegebenenfalls Kettenverlängerungs- und/oder Vernetzungsmittel zum Prepolymer umgesetzt werden. Dabei werden Polyisocyanat, polymeren Verbindungen mit mindestens zwei gegenüber Isocyanaten reaktiven Gruppen, gegebenenfalls Verbindungen mit einer gegenüber Isocyanaten reaktiven Gruppe sowie gegebenenfalls Kettenverlängerungs- und/oder Vernetzungsmittel vorzugsweise in einem Verhältnis von Isocyanatgruppen zu gegenüber Isocyanaten reaktiven Gruppen von 1.5 : 1 bis 15 : 1, vorzugsweise 1,8 : 1 bis 8 : 1 miteinander vermischt. Besonders bevorzugt werden zur Herstellung der Prepolymere Polyisocyanate polymeren Verbindungen mit mindestens zwei gegenüber Isocyanaten reaktiven Gruppen, gegebenenfalls Verbindungen mit einer gegenüber Isocyanaten reaktiven Gruppe sowie gegebenenfalls Kettenverlängerungs- und / oder Vernetzungsmittel in einem Verhältnis miteinander vermischt, dass der NCO-Gehalt des hergestellten Prepolymers im Bereich von 5 bis 30, insbesondere von 10 bis 25 Gew.-%, bezogen auf das Gesamtgewicht des hergestellten Isocyanatprepolymers, liegt. Anschließend können vorzugsweise flüchtige Isocyanate abgetrennt werden, vorzugsweise durch Dünnschichtdestillation. Dabei liegt die Viskosität der Isocyanatprepolymere vorzugsweise bei 100 bis 5000 mPas bei 25 °C. Erfindungsgemäße Isocyanatprepolymere auf Basis von Toluoldiisocyanat weisen dabei typischerweise eine Viskosität von 500 bis 3000 mPas auf, während erfindungsgemäße Isocyanatprepolymere auf Basis von Diphenylmethandiisocyanat typischerweise eine Viskosität von 600 bis 3000 mPas aufweisen, jeweils bei 25 °C. Die Mittlere Isocyanatfunktionalität der Isocyanatprepolymere beträgt vorzugsweise 2,0 bis 2,9, besonders bevorzugt 2,1 bis 2,6.

Der feuchtigkeitshärtende Polyurethanklebstoff kann auch Katalysatoren enthalten. Diese umfassen beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin verwendet. Ebenso kommen als Katalysatoren organische Metallverbindungen in Betracht, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-etyhlhexanoat und Bismut-octanoat oder Mischungen davon. Die organischen Metallverbindungen können allein oder in Kombination mit basischen Aminen eingesetzt werden.

Vorzugsweise werden weniger als 2 Gew.-%, besonders bevorzugt weniger als 1 Gew.-% und insbesondere kein Katalysator bzw. Katalysatorkombination, bezogen auf das Gewicht des Isocyanatgruppen aufweisenden Prepolymers zugegeben.

Bei der Herstellung des erfindungsgemäßen Verbundteils wird vorzugsweise zwischen 20 bis 300 g, besonders bevorzugt 50 bis 200 g feuchtgkeitshärtender Polyurethanklebstoff pro $m^2$ des thermoformbaren Polyurethan-Hartschaumstoffs eingesetzt.

Die Härtung des feuchtigkeitshärtenden Polyurethanklebstoffs erfolgt durch in Kontakt bringen mit einer alkalischen, wässrigen Alkalimetall-Lösung. Diese enthält im Wesentlichen keine Silikate. Dabei umfassen Silikate alle löslichen Silzium-Sauerstoffverbindungen, insbesondere alle von $SiO_4^{4-}$ abgeleitete Verbindungen und deren Kondensate. Dabei bedeutet "im Wesentlichen", dass der wässrigen Alkalimetall-Lösung keine Verbindungen zugegeben werden, die lösliche Silikate enthalten, wie beispielsweise Wasserglas. Lösliche Silikate, die beispielsweise durch unbeabsichtigtes lösen aus Gläsern, wie beispielsweise üblichen Glasgefäßen, in Lösung gelangen können, sollen hierbei nicht ausgeschlossen werden.

Vorzugsweise weist die alkalische, wässrige Alkalimetall-Lösung eine Konzentration Alkalimetallkonzentration von 0,1 bis 10 mol und einen pH Wert von mindestens 10, vorzugsweise von mindestens 11, besonders bevorzugt von mindestens 12, weiter bevorzugt mindestens 13 und insbesondere mindestens 13,5 auf. Dabei ist der maxiamle pH Wert nicht beschränkt. Aus verfahrenstechnischen Gründen beträgt die OH- -Konzentration aber vorzugsweise nicht mehr als 10 mol/L, besonders bevorzugt nicht mehr als 5 mol/L, weiter bevorzugt nicht mehr als 3 mol/L und insbesondere nicht mehr als 2 mol/L. Insbesondere sind die Alkalimetallionen in der Lösung Lithium-, Natrium- oder Kaliumionen sowie Mischungen enthaltend mindestens zwei von Lithium-, Natrium- und Kaliumionen, bevorzugt Mischungen enthaltend Natrium- und Kaliumionen. Dabei kann die alkalische, wässrige Alkalimetall-Lösung beispielsweise durch Lösen von Alkalimetallverbindungen mit schwachen Säuren oder und/oder Akalimetallhydroxyden sowie durch direkte Reaktion von Alkalimetall mit Wasser erhalten werden. Als schwache Säuren werden dabei Verbindungen mit einem pKs-Wert für die Deprotonierung des letzten Wasserstoffatoms von mindestens 8, bevorzugt mindestens 9 und insbesondere mindestens 10 verstanden. Ein Beispiel für mögliche Alkalimetallverbindung mit einer schwachen Säure sind Alkalimetallsalze der Isocyansäure, Alkalimetallsulfide, Alkalimetallphosphate und Alkalimetallcarbonate, vorzugsweise Alkalimetallcarbonate. Insbesondere werden Alkalimetallhydroxyde und/oder Alkalimetallcarbonate eingesetzt.

Typischwerweise liegt das Gewichtsverhältnis von alkalischer, wässriger Alkalimetall-Lösung und feuchtigkeitshärtendem Polyutehanklebstoff zwischen 2 : 1 und 1 : 10, vorzugsweise zwischen 1 : 1 und 1 : 5. Dies entspricht einem Auftrag von 1 bis 150 g pro $m^2$ thermoformbarem Polyurethanhartschaumstoff.

Bei der Herstellung der erfindungsgemäßen Verbundteile wird üblicherweise der thermoformbare Polyurethan-Hartschaumstoff vorgelegt. Auf diesen wir dann einseitig oder vorzugsweise zweiseitig der feuchtigkeitshärtende Polyurethanklebstoff aufgebracht und mit der Alkalimetall-lösung besprüht. Anschließend wird das Abdeckmaterial aufgebracht und der Verbundkörper in einer Form bei erhöhten Temperatur, vorzugsweise bei 60 bis 180 °C, besonders bevorzugt bei 100 bis 150 °C geformt und der feuchtigkeitshärtende Polyurethanklebstoff gehärtet. Bei Einhaltung der bevorzugten Mengenverhältnisse wird bei dieser Verarbeitung ein Aufschäumen des feuchtigkeitshärtenden Polyurethanklebstoffs erreicht, wodurch die Offenzelligkeit des thermoformbaren Polyurethanhartschaumstoffs nicht beeinträchtigt wird.

Gegenstand der Erfindung ist auch ein Verbundteil, erhältlich nach einem erfindungsgemäßen Verfahren.

Das erfindungsgemäße Verbundteil wird vorzugsweise als Verkleidungsteil in Land, Wasser und Luftfahrzeugen, besonders bevorzugt als Verkleidungsteile in Automobilen, insbesondere als Dachhimmel eingesetzt.

Das erfindungsgemäße Verfahren kann auf vorhandenen Produktionsanlagen durchgeführt werden. Dabei sind die als Klebstoff eingesetzten feuchtigkeitshärtenden Polyurethanprepolymere lange lagerstabil und auch bei Raumtemperatur oder leicht erhöhter Temperatur lange verarbeitbar, da kein oder nur verhältnismäßig wenig Katalysator in im feuchtigkeitshärtenden Polyurethanklebstoff enthalten ist.

Überraschenderweise wurde gefunden, dass das erfindungsgemäße Verfahren auch zu einer vorteilhaften Versteifung des thermogeformten Polyurethan-Hartschaumstoffs führt. Weiter führt ein erfindungsgemäßes Verfahren zu einer schnelleren Entformzeit und damit zu einer wirtschaftlicheren Ausnutzung der Produktionsanlagen.

Im Folgenden wird die Erfindung anhand von Beispielen verdeutlicht.

Ausgangsmaterialen

| | |
|---|---|
| Polyol 1: | Propylenglycol-gestartetes Polyetherpolyol (OHZ 30 mg KOH/g) mit überwiegend primären OH Gruppen (Zusammensetzung 80% Propylenoxid, 20% Ethylenoxid) |
| Polyol 2: | Methylpolyethylenglycol (OHZ 113 mg KOH/g) |
| Isocyanat: | Polymeres Diisocyanatodiphenylmethan (PMDI) |
| Katalysator 1: | Organozinnester |
| Katalysator 2: | wässrige Lösung von Natriumsilikat $M_2O$ : $SiO_2$ Verhältnis: |

(fortgesetzt)

| | |
|---|---|
| | SiO$_2$:Na$_2$O 3,3:1 (16% Feststoffgehalt) |
| Katalysator 3: | wässrige Natriumcarbonatlösung (0.5 mol/L) |
| Katalysator 4: | wässrige Natriumhydroxidlösung (0.5 mol/L) |
| Katalysator 5: | wässrige Kaliumcarbonatlösung (0.2 mol/L) |
| Katalysator 6: | wässrige Kaliumhydroxidlösung (0.5 mol/L) |
| Inhibitor 1: | Diglycol-bis-Chlorformiat (DIBIS) |
| Inhibitor 2: | ortho-Phosphorsäure 85 % |

Beispiel:

Herstellung des Polyurethanklebstoffs (Vergleichsbeispiel 2, Beispiele 1 bis 4):
In einem Rührkessel wurden 70 Gew.-Teile eines PMDI und 0,01 Gew.-Teile Inhibitor 1 vorgelegt und unter Rühren auf 80°C erwärmt. Hierzu wurden langsam 29,6 Gew.-Teile eines Gemisches aus Polyol 1 und Polyol 2 (Gewichtsverhältnis 1:2) zugegeben. Nach Ende der Zugabe wurde 120 Minuten nachgerührt, auf 25°C gekühlt und abgefüllt. Der NCO Gehalt und die Viskosität des erhaltenen Polyurethanprepolymers lag bei 21 % bzw. bei 500 mPas. Anschließend wurden 0,02 Gew.-Teile Inhibitor 1 und 0,03 Gew.-Teile Inhibitor 2 zugegeben.

Herstellung des Schaumstoffs aus dem Polyurethanklebstoff.
Vergleichsbeispiel 2, Beispiele 1 bis 4:
20,0 Gew.-Teile des Polyurethanklebstoffs und 1,2 Gew.-Teile Katalysator 2, 3, 4, 5 oder 6 wurden miteinander vermischt und die Reaktionsmischung zum Polyurethanschaumstoff ausreagieren lassen. Dabei wurde ein offen- und grobzelliger Schaumstoff erhalten. Start-, Abbinde und Steigzeiten sind in Tabelle 1 angegeben.

Vergleich 1:

Herstellung des Polyurethanklebstoffs:
Es wurde wie bei dem Beispiel 1 bis 4 verfahren, wobei des Weiteren 0,06 Teile Katalysator 1 zugegeben wurden.

Herstellung des Schaumstoffs aus dem Polyurethanklebstoff (Vergleich 1):
20,0 Gew.-Teile des Polyurethanklebstoffs, und 1,2 Teile Wasser wurden miteinander vermischt und die Reaktionsmischung zum Polyurethanschaumstoff ausreagieren lassen. Dabei wurde ein offen- und grobzelliger Schaumstoff erhalten.

Die Reaktivität der Reaktionsmischungen zur Herstellung der Polyurethanschaumstoffe gemäß Beispiel und Vergleich sowie der Viskosität und Viskositätsanstieg der Polyurethanklebstoffe gemäß Beispiel und Vergleich nach 2 h Rühren bei 55°C über einem Wasserbad sind in Tabelle 1 aufgeführt:

Tabelle 1:

| | V1 | V2 | B1 | B2 | B3 | B4 |
|---|---|---|---|---|---|---|
| Startzeit (s) | 34 | 39 | 28 | 30 | 30 | 29 |
| Abbindezeit (s) | 168 | 110 | 80 | 90 | 100 | 85 |
| Steigzeit (s) | 300 | 200 | 155 | 200 | 240 | 175 |
| Zellstruktur | grob, offen | grob, offen | grob, offen | grob, offen | grob, offen | grob, offen |
| Viskosität des Polyurethanklebstoffs [mPas bei 45°C] | 775 | 364 | | | | |
| Viskosität (45°C) des Polyurethanklebstoffs (Reaktionsmischung?) nach 2 h Rühren bei 55°C über einem Wasserbad [mPas bei 45°C] | 1245 | 432 | | | | |

Die Tabelle zeigt, dass der Schaumstoff gemäß den Beispielen 1 bis 4 neben der gewünschten offenen und groben Zellstruktur eine schnellere Reaktionsgeschwindigkeit aufweist. Durch die kürzere Abbinde- und Steigzeit wird eine schnellere Zykluszeit erreicht. Weiter zeigt ein erfindungsgemäßer Polyurethanklebstoff eine deutlich verbesserte Stabilität bei den Bedingungen vor Auftragung, der sogenannten Walzenstabilität, die durch 2 Stunden Rühren bei 55 °C über einem Wasserbad simuliert wurden, da diese wie auch der Klebstoff nach Vergleichsbeispiel 2 keinen Katalysator enthalten.

Mit Hilfe des feuchtigkeitshärtenden Polyurethanklebstoffs wird unter Verwendung der erfindungsgemäßen Katalyse (Beispiel 1 und 2) sowie der Katalyse gemäß der Vergleichsbeispiele 1 und 2 ein Dachhimmel hergestellt. Dabei wurde folgende Schichtabfolge eingesetzt:

1. Non Woven 190 g/m2 Fa.Fytisa (1,1 mm)
2. Mat GlassFaser 100+/-10 g/m2 Owens Corning Vetrotex
3. Wasser 25 g/m$^2$
4. Kleber 100 g/m$^2$
5. Schaum RG20 Elastoflex E 3943/112 10,6 mm (22 Kg/m$^3$)
6. Kleber 100 g/m$^2$
7. Wasser 25 g/m$^2$
8. Mat GlassFaser 100+/-10 g/m2 Owens Corning Vetrotex
9. Non Woven PET mit LDPE in unsichtbare Seite (45g/m$^2$ PET Faser+15 g/m$^2$ LDPE). Fa Fytisa (0,25 mm)

Das Material wurde im Formwerkzeug bei 130°C für 25 Sekunden auf eine Dicke von 11 mm verpresst und die Biegefestigkeit des hergestellten Dachhimmels wurde in Anlehnung an DIN 53423 bestimmt. Dabei betrugen die Breite des Prüfkörpers 50 mm und die Dicke 11 mm. Die Prüfgeschwindigkeit betrug 50 mm/Minute. Alle Prüfkörper erreichten die maximale Kraft bei ca. 5 mm Durchbiegung. Anschließend brachen die Prüfkörper nicht, die maximale Kraft nahm aber bei weiterer Durchbiegung wieder ab. In der folgenden Tabelle sind die Werte für die Maximalkraft, den E-Modul, die Kraft bei 20 mm Durchbiegung, die maximale Kraft und die Steifigkeit, die sich aus der anfänglichen Steigung der Kraft-Biegungskurve im linearen Bereich ergibt, angegeben. Dabei ergeben sich die Werte aus dem Mittelwert dreier Einzelmessungen. Der E-Modul errechnet sich nach folgender Formel:

$$E\,(\text{Modul in MPA}) = \frac{\text{Kraft (N)} \cdot (\text{Länge (mm)})^3}{4 \cdot Durchbiegung(mm) \cdot Breite(mm) \cdot Dicke(mm))^3}$$

$$= Steifigkeit(N/mm) \frac{(\text{Länge (mm)})^3}{4 \cdot Breite(mm) \cdot Dicke(mm))^3}$$

Tabelle 2:

|  | V1 | V2 | B1 | B2 |
|---|---|---|---|---|
| Maximalkraft (N) | 13.46 | 17.79 | 24.68 | 24.40 |
| Kraft bei 20 mm Durchbiegung (N) | 8.56 | 10.71 | 15.40 | 18.06 |
| Steifigkeit (N/mm) | 6.34 | 9.18 | 9.80 | 10.84 |
| E-Modul (MPa) | 24.30 | 34.16 | 38.78 | 41.99 |

Die Dachhimmel gemäß den Beispielen weisen einen deutlich höheren E-Modul, und Steifigkeit auf als die Dachhimmel gemäß den Vergleichsversuchen.

**Patentansprüche**

1. Verfahren zur Herstellung von Verbundteilen aus einem thermoformbaren Polyurethan-Hartschaumstoff und einem Abdeckmaterial, bei dem man einen thermoformbaren Polyurethanschaumstoff vorlegt und mit Abdeckmaterial verklebt, wobei als Klebstoff ein feuchtigkeitshärtender Polyurethanklebstoff eingesetzt wird, der durch in Kontakt bringen mit einer alkalischen, wässrigen Alkalimetall-Lösung gehärtet wird, wobei der alkalischen, wässrigen Alkalimetall-Lösung keine Verbindungen zugegeben werden, die lösliche Silikate enthalten.

2. Verfahren nach Anspruch 1, **dadurch gekennzeichnet, dass** die Konzentration der alkalischen, wässrigen Alkalimetall-Lösung 0,1 bis 10 molar, bezogen auf das Alkalimetall, ist.

3. Verfahren nach Anspruch 1 oder 2, **dadurch gekennzeichnet, dass** der pH-Wert der wässrigen, alkalischen Alkalimetall-Lösung mindestens 10 ist.

4. Verfahren nach einem der Ansprüche 1 bis 3, **dadurch gekennzeichnet, dass** das Alkalimetall Natrium oder Kalium oder eine Mischung beider ist.

5. Verfahren nach einem der Ansprüche 1 bis 4, **dadurch gekennzeichnet, dass** die alkalischen, wässrigen Alkalimetall-Lösung in einer Menge von 10 bis 150 g/m$^2$ thermoformbarem Polyurethan-Hartschaumstoff aufgetragen wird.

6. Verfahren nach einem der Ansprüche 1 bis 5, **dadurch gekennzeichnet, dass** der feuchtigkeitshärtende Polyurethanklebstoff zu mindestens 80 Gew.-%, bezogen auf das Gesamtgewicht des feuchtigkeitshärtenden Polyurethanklebstoffs, isocyanatterminiertes Prepolymer enthält, das durch Vermischen eines stöchiometrischen Überschusses von aromatischem Isocyanat mit polymeren Verbindungen mit mindestens zwei gegenüber Isocyanaten reaktiven Gruppen und gegebenenfalls Verbindungen mit nur einem gegenüber Isocyanaten reaktiven Gruppe sowie gegebenenfalls Kettenverlängerungs- und/oder Vernetzungsmittel erhältlich ist.

7. Verfahren nach Anspruch 6, **dadurch gekennzeichnet, dass** das isocyanatterminierte Prepolymer einen NCO-Gehalt von 5 bis 30 Gew.-% aufweist.

8. Verfahren nach einem der Ansprüche 1 bis 7, **dadurch gekennzeichnet, dass** neben der alkalischen, wässrigen Alkalimetall-Lösung keine weiteren Katalysatoren zur Aushärtung des Klebstoffs eingesetzt werden.

9. Verfahren nach einem der Ansprüche 1 bis 8, **dadurch gekennzeichnet, dass** der Klebstoff in einer Menge von 20 bis 300 g/m$^2$ thermoformbarer Polyurethan-Hartschaumstoff eingesetzt wird.

10. Verfahren nach einem der Ansprüche 1 bis 9, **dadurch gekennzeichnet, dass** der thermoformbare Polyurethanschaumstoff, das Abdeckmaterial und der feutigkeitshärtende Polyurethanklebstoff in einer Form mit einer Formtemperatur von 60 bis 180 °C verklebt werden.

11. Verbundteil, erhältlich nach einem Verfahren gemäß einem der Ansprüche 1 bis 10.

12. Verwendung des Verbundteils nach Anspruch 12 in Fahrzeugen.

**Claims**

1. A process for producing composite parts comprising a thermoformable rigid polyurethane foam and a covering material, wherein a thermoformable polyurethane foam is provided and adhesively bonded to covering material, where a moisture-curing polyurethane adhesive which is cured by bringing into contact with an alkaline, aqueous alkali metal solution is used as adhesive, where no compounds comprising soluble silicates are added to the alkaline, aqueous alkali metal solution.

2. The process according to claim 1, wherein the concentration of the alkaline, aqueous alkali metal solution is from 0.1 to 10 molar, based on the alkali metal.

3. The process according to claim 1 or 2, wherein the pH of the aqueous, alkaline alkali metal solution is at least 10.

4. The process according to any of claims 1 to 3, wherein the alkali metal is sodium or potassium or a mixture of the two.

5. The process according to any of claims 1 to 4, wherein the alkaline, aqueous alkali metal solution is applied in an amount of from 10 to 150 g/m$^2$ of thermoformable rigid polyurethane foam.

6. The process according to any of claims 1 to 5, wherein the moisture-curing polyurethane adhesive comprises at least 80% by weight, based on the total weight of the moisture-curing polyurethane adhesive, of isocyanate-terminated prepolymer which can be obtained by mixing a stoichiometric excess of aromatic isocyanate with polymeric compounds having at least two groups which are reactive toward isocyanates and optionally compounds having only one group which is reactive toward isocyanates and optionally chain extenders and/or crosslinkers.

7. The process according to claim 6, wherein the isocyanate-terminated prepolymer has an NCO content of from 5 to 30% by weight.

8. The process according to any of claims 1 to 7, wherein no further catalysts apart from the alkaline, aqueous alkali metal solution are used for curing the adhesive.

9. The process according to any of claims 1 to 8, wherein the adhesive is used in an amount of from 20 to 300 g/m$^2$ of thermoformable rigid polyurethane foam.

10. The process according to any of claims 1 to 9, wherein the thermoformable polyurethane foam, the covering material and the moisture-curing polyurethane adhesive are adhesively bonded in a mold having a mold temperature of from 60 to 180°C.

11. A composite part which can be obtained by a process according to any of claims 1 to 10.

12. The use of the composite part according to claim 12 in vehicles.


**Revendications**

1. Procédé pour la fabrication de pièces composites à partir d'une mousse rigide de polyuréthane thermoformable et d'un matériau de recouvrement, dans lequel on dispose au préalable une mousse de polyuréthane thermoformable et on la colle avec un matériau de recouvrement, en utilisant comme adhésif un adhésif polyuréthane durcissant à l'humidité, qui est durci par mise en contact avec une solution aqueuse alcaline de métal alcalin, en n'ajoutant pas de composés qui contiennent des silicates solubles à la solution aqueuse alcaline de métal alcalin.

2. Procédé selon la revendication 1, **caractérisé en ce que** la concentration de la solution aqueuse alcaline de métal alcalin est 0,1 à 10 molaire, sur la base du métal alcalin.

3. Procédé selon la revendication 1 ou 2, **caractérisé en ce que** le pH de la solution aqueuse alcaline de métal alcalin est au moins 10.

4. Procédé selon l'une quelconque des revendications 1 à 3, **caractérisé en ce que** le métal alcalin est le sodium ou le potassium ou un mélange des deux.

5. Procédé selon l'une quelconque des revendications 1 à 4, caractérisé en ce la solution aqueuse alcaline de métal alcalin est appliquée en une quantité de 10 à 150 g/m$^2$ de mousse rigide de polyuréthane thermoformable.

6. Procédé selon l'une quelconque des revendications 1 à 5, **caractérisé en ce que** l'adhésif polyuréthane durcissant à l'humidité contient à raison d'au moins 80 % en poids, par rapport au poids total de l'adhésif polyuréthane durcissant à l'humidité, de prépolymère à terminaison isocyanate, qui peut être obtenu par mélange d'un excès stœchiométrique d'isocyanate aromatique avec des composés polymères, comportant au moins deux groupes réactifs vis-à-vis d'isocyanates, et éventuellement des composés comportant un seul groupe réactif vis-à-vis d'isocyanates ainsi qu'éventuellement des prolongateurs de chaîne et/ou des agents de réticulation.

7. Procédé selon la revendication 6, **caractérisé en ce que** le prépolymère à terminaison isocyanate présente une teneur en NCO de 5 à 30 % en poids.

8. Procédé selon l'une quelconque des revendications 1 à 7, **caractérisé en ce qu'**outre la solution aqueuse alcaline de métal alcalin on n'utilise pas d'autres catalyseurs pour le durcissement de l'adhésif.

9. Procédé selon l'une quelconque des revendications 1 à 8, **caractérisé en ce que** l'adhésif est utilisé en une quantité de 20 à 300 g/m$^2$ de mousse rigide de polyuréthane thermoformable.

10. Procédé selon l'une quelconque des revendications 1 à 9, **caractérisé en ce que** la mousse de polyuréthane thermoformable, le matériau de recouvrement et l'adhésif polyuréthane durcissant à l'humidité sont collés dans un moule ayant une température de moule de 60 à 180 °C.

11. Pièce composite, pouvant être obtenue conformément à un procédé selon l'une quelconque des revendications 1 à 10.

12. Utilisation de la pièce composite selon la revendication 12 dans des véhicules.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 437787 A
- DE 4333795
- EP 464483 A
- WO 2010139708 A
- DE 102004062540

**In der Beschreibung aufgeführte Nicht-Patentliteratur**

- Kunststoffhandbuch, Band 7, Polyurethane. Carl Hanser Verlag, 1993, vol. 7